# EUROPEAN PATENT APPLICATION

(11) **EP 4 607 435 A1**
(43) Date of publication of application: **27.08.2025**
(21) Application number: 25157154.3
(22) Date of filing: 11.02.2025
(51) Int. Cl.: G06Q 30/0601

(54) **CONSUMABLES ORDERING SYSTEM AND CONSUMABLES ORDERING PROGRAM**

(30) Priority: 22.02.2024 JP 2024026025
(71) Applicant: KYOCERA Document Solutions Inc., Osaka-shi, Osaka, 540-8585 (JP)
(72) Inventor: MATSUMOTO, Atsushi, Osaka-shi, Osaka, 540-8585 (JP)
(74) Representative: Herrero & Asociados, S.L.

(57) **Abstract**

A consumables ordering system (20) includes a communication device (23), a storage device (24), and a control device (25). The communication device (23) communicates with an external device. In the storage device (24), a predetermined destination is stored. The control device (25) includes a processor, and acts as an automatic ordering device (25A) that places an order for consumables to be used in an electronic device (30, 40), when the processor executes a consumables ordering program (24A). The automatic ordering device (25A) sends, when ordering of the consumables has failed, ordering failure information indicating that the ordering of the consumables has failed, to a predetermined destination via the communication device (23).

## Description

### BACKGROUND

The present invention relates to a consumables ordering system for automatically ordering consumables used in an electronic device, and a computer-readable, non-transitory recording medium having a consumables ordering program recorded thereon.

A consumables ordering system, for automatically ordering the consumables used in electronic devices, is widely known.

### SUMMARY

The invention proposes further improvement of the foregoing technique.

In an aspect, the invention provides a consumables ordering system including a communication device, a storage device, and a control device. The communication device communicates with an external device. In the storage device, a predetermined destination is stored. The control device includes a processor, and acts as an automatic ordering device that places an order for consumables to be used in an electronic device, when the processor executes a consumables ordering program. The automatic ordering device sends, when ordering of the consumables has failed, ordering failure information indicating that the ordering of the consumables has failed, to a predetermined destination via the communication device.

In another aspect, the invention provides a computer-readable, non-transitory recording medium having a consumables ordering program recorded thereon. The consumables ordering program is configured to cause a computer, including a communication device that communicates with an external device, a storage device in which a predetermined destination is stored, and a processor, to act as an automatic ordering device, when the processor executes the consumables ordering program. The automatic ordering device places an order for consumables to be used in an electronic device, and sends, when ordering of the consumables has failed, ordering failure information indicating that the ordering of the consumables has failed, to a predetermined destination via the communication device.

### BRIEF DESCRIPTION OF THE DRAWINGS

Fig. 1 is a block diagram showing a configuration of a system according to an embodiment of the invention;
Fig. 2 is a block diagram showing a device management system, constituted of a single computer;
Fig. 3 presents an example of model information;
Fig. 4 presents an example of customer information;
Fig. 5 presents an example of device information;
Fig. 6 presents an example of order condition information;
Fig. 7 presents an example of replacement history information;
Fig. 8 presents an example of automatic ordering history information;
Fig. 9 presents an example of ordering failure history information;
Fig. 10 is a block diagram showing a configuration of an image forming apparatus, not configured to receive a toner serial number notice;
Fig. 11 is a block diagram showing a configuration of an image forming apparatus, configured to receive the toner serial number notice;
Fig. 12 is a block diagram showing a configuration of an external ordering system constituted of a single computer;
Fig. 13 is a block diagram showing a configuration of a user terminal constituted of a PC;
Fig. 14 is a flowchart showing an operation of the device management system, performed when setting an automatic ordering condition;
Fig. 15 presents an example of an order condition setting screen;
Fig. 16 is a flowchart showing an example of the operation of an image forming apparatus, performed when notifying a toner level;
Fig. 17 is a flowchart showing another example of the operation of the image forming apparatus, performed when notifying the toner level;
Fig. 18 is a flowchart showing an operation of the device management system, performed upon receipt of toner-related information;
Fig. 19 is a flowchart showing a flag status updating process;
Fig. 20 is a flowchart showing an automatic ordering process;
Fig. 21 is a table showing various types of information included in ordering information of a toner container;
Fig. 22 is a flowchart showing an operation of the external ordering system, performed when the toner is ordered from the device management system;
Fig. 23 is a flowchart showing an operation of the device management system, performed when notifying automatic ordering failure information;
Fig. 24 is a table showing various types of information included in the automatic ordering failure information;
Fig. 25 is a flowchart showing an operation of the device management system, performed when the status of an automatic ordering prohibition flag is manually changed; and
Fig. 26 presents an example of an automatic ordering prohibition status screen.

### DETAILED DESCRIPTION

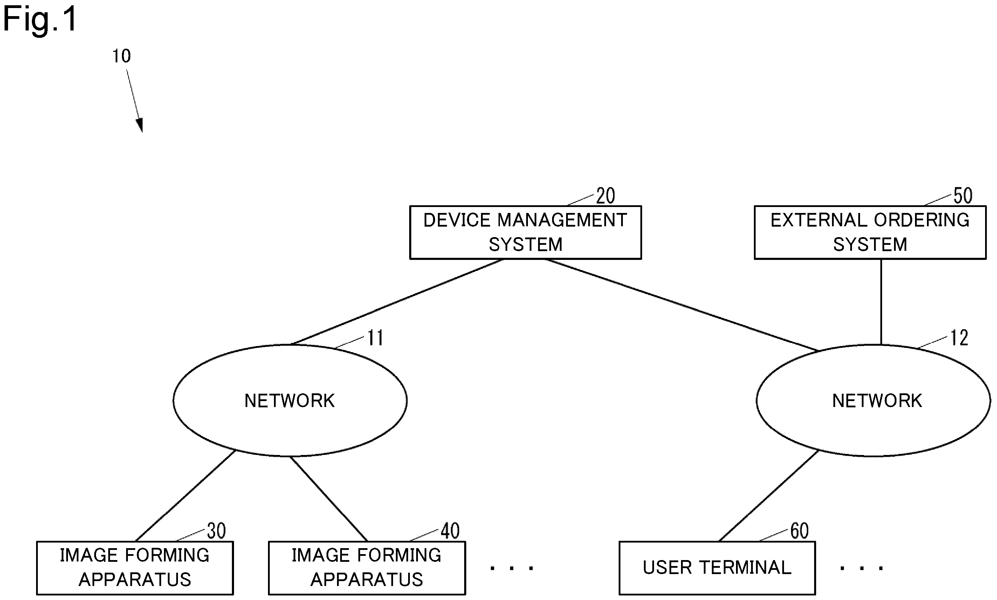

Hereafter, an embodiment of the invention will be described, with reference to the drawings. First, a configuration of a system according to the embodiment will be described. Fig. 1 is a block diagram showing the configuration of the system 10 according to the embodiment of the invention.

As shown in Fig. 1, the system 10 includes a device management system 20, for managing image forming apparatuses 30 and 40, exemplifying the electronic device in the invention. The device management system 20 may be constituted of a single computer such as a personal computer (PC), or a plurality of computers. The device management system 20 may be configured as a cloud server.

The device management system 20 is, for example, managed by the manufacturer of the image forming apparatuses 30 and 40. The device management system 20 is utilized, for example, by a service person belonging to a service provider that provides the maintenance service for the image forming apparatuses 30 and 40.

The system 10 includes image forming apparatuses 30 and 40, which may be, for example, a multifunction peripheral (MFP) or a single-function printer. The system 10 may include, in addition to the image forming apparatuses 30 and 40, one or more image forming apparatuses configured similarly to the image forming apparatus 30 or 40.

The image forming apparatus 30 is, for example, installed at the location of the office of the user of the image forming apparatus 30, such as a customer of the service provider. To each of the image forming apparatuses 30, a serial number is assigned as identification information. In each of the image forming apparatuses 30 and 40, a toner container, containing a toner which is a consumable used by a printer of the image forming apparatuses 30 and 40, is replaceably mounted.

To each of the toner containers, a toner serial number serving as identification information is assigned. The image forming apparatus 30 is not a model configured to receive a notice of the toner serial number. In contrast, the image forming apparatus 40 is a model configured to receive the notice of the toner serial number.

The system 10 includes an external ordering system 50 that places an order for the toner outside the device management system 20. The external ordering system 50 may be constituted of a single computer such as a PC, or a plurality of computers. The external ordering system 50 may be configured as a cloud server.

The external ordering system 50 is, for example, managed by a service provider. The external ordering system 50 is utilized, for example, by a service person belonging to the service provider, and in charge of the maintenance service for the image forming apparatuses 30 and 40.

The system 10 includes a user terminal 60, for example a PC or a smartphone, to be utilized by the user of the device management system 20 such as a service person. The system 10 may include, in addition to the user terminal 60, one or more user terminals configured similarly to the user terminal 60.

The device management system 20 and the image forming apparatuses 30 and 40 can communicate with each other, via the network 11 such as a local area network (LAN) or the internet.

The device management system 20, the external ordering system 50, and the user terminal 60 can communicate with each other, via the network 12 such as a LAN or the internet.

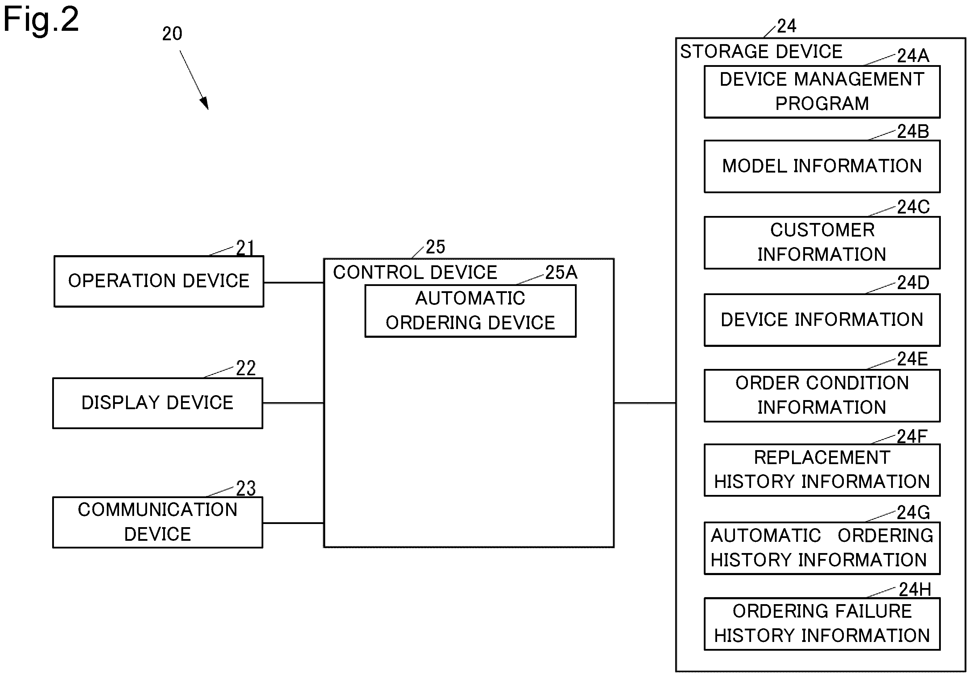

Fig. 2 is a block diagram showing the device management system 20 constituted of a single computer. As shown in Fig. 2, the device management system 20 includes an operation device 21, a display device 22, a communication device 23, a storage device 24, and a control device 25.

The operation device 21 includes, for example, a keyboard and a mouse for inputting various operations. The display device 22 includes, for example, a liquid crystal display (LCD) for displaying various types of information. The communication device 23 performs communication with an external device, via a network such as a local area network (LAN) or the internet, or directly through wired or wireless communication. The storage device 24 includes a non-volatile memory unit such as a semiconductor memory or a hard disk drive (HDD), for storing various types of information. The control device 25 controls the overall operation of the device management system 20.

The storage device 24 can store therein a device management program 24A, for managing the image forming apparatuses 30 and 40. The device management program 24A may be, for example, installed in the device management system 20 during the manufacturing process thereof, additionally installed in the device management system 20 from an external storage medium such as a universal serial bus (USB) memory, or additionally installed in the device management system 20 from the network.

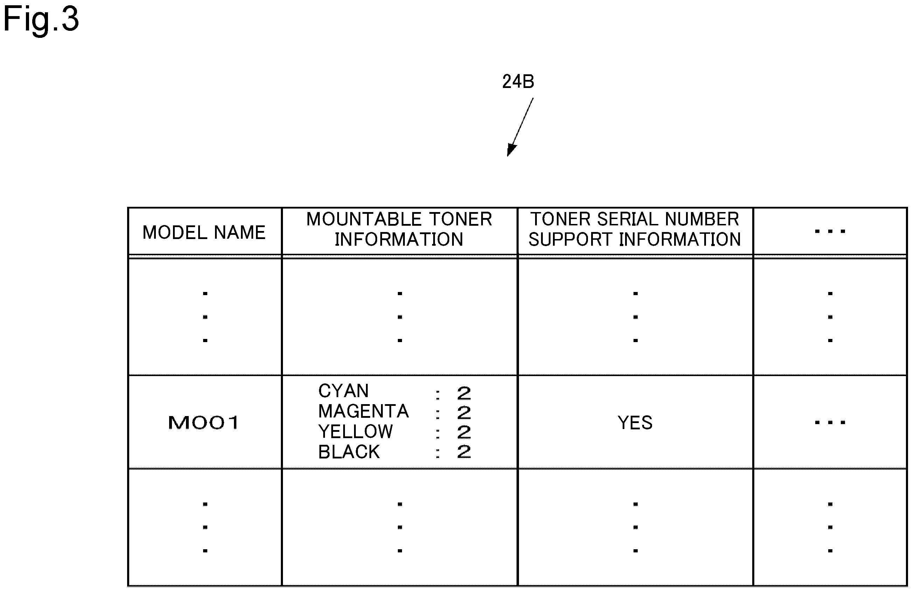

The storage device 24 can store therein model information 24B, regarding models of the image forming apparatuses 30 and 40. Fig. 3 presents an example of the model information 24B. As shown in Fig. 3, the model information 24B includes a model name, serving as the identification information of the model of the image forming apparatus 30 or 40, mountable toner information, and toner serial number support information, in association with each of the models.

The mountable toner information indicates how many toner containers of which color can be mounted. The toner serial number support information indicates whether the image forming apparatus 30 or 40 is configured to receive a notice of the toner serial number. Fig. 3 shows a part of the content of the information model information 24B. For example, the model information 24B indicates that the image forming apparatus 40 having the model name "M001" can be loaded with two each of cyan, magenta, yellow, and black toner containers, and that this model is configured to receive the notice of the toner serial number.

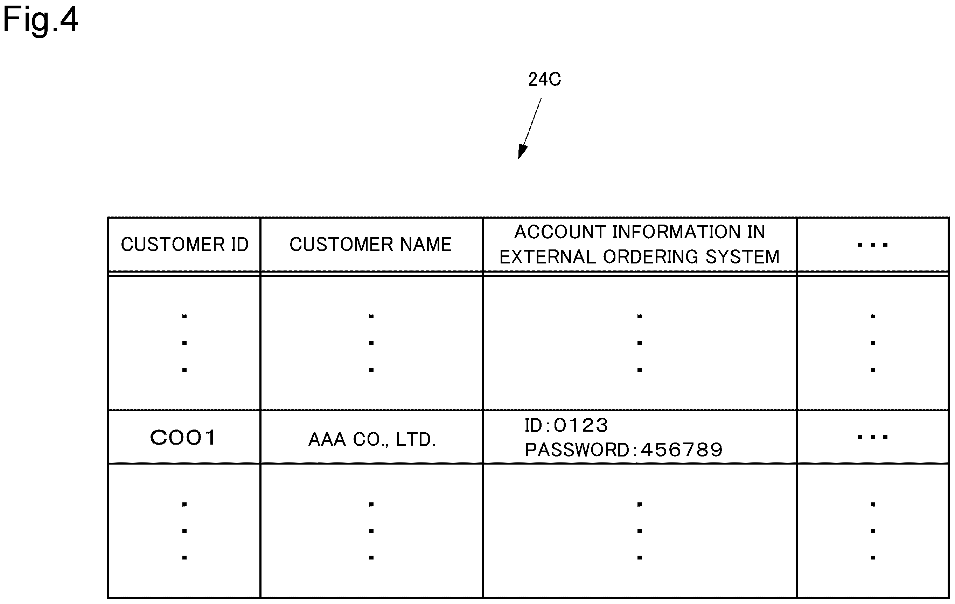

As shown in Fig. 2, the storage device 24 can store therein customer information 24C, including information regarding the user of the image forming apparatuses 30 and 40, in other words the customer of the service provider. Fig. 4 presents an example of the customer information 24C. The customer information 24C shown in Fig. 4 includes a customer ID serving as the identification information of the customer, the customer name, and account information of the customer in the external ordering system 50, in association with each of the customers.

Fig. 4 shows a part of the content of the customer information 24C. For example, the customer information 24C indicates that the customer having the customer ID "C001" has the customer name "AAA Co., Ltd.", and has the ID "0123" and the password "456789", in the external ordering system 50.

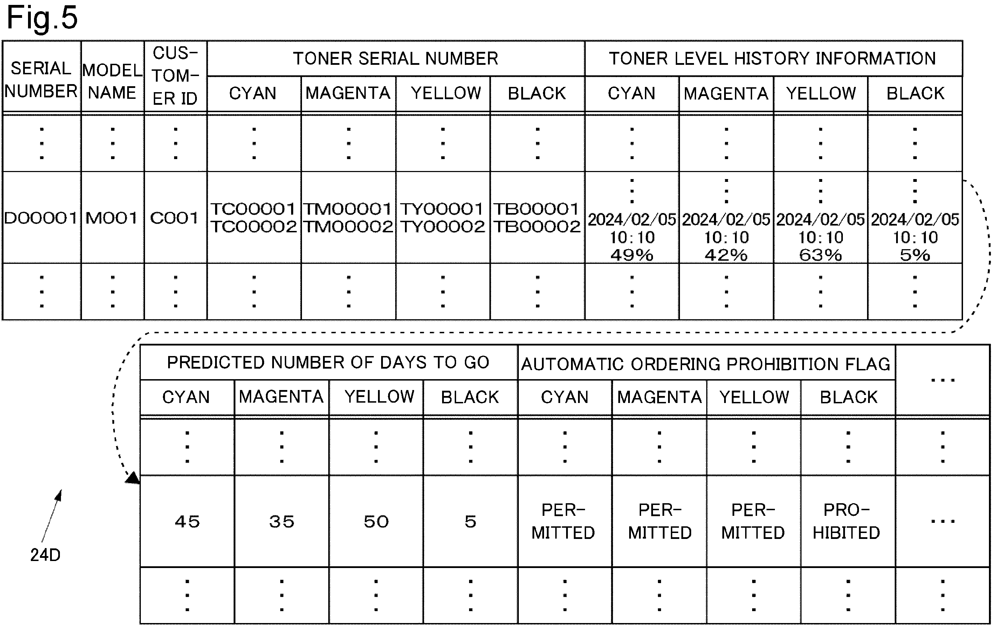

As shown in Fig. 2, the storage device 24 can store therein device information 24D, indicating various aspects of the image forming apparatuses 30 and 40. Fig. 5 presents an example of the device information 24D.

As shown in Fig. 5, the device information 24D includes the serial number of the image forming apparatus 30 or 40, the model name of the image forming apparatus 30 or 40, the customer ID of the user of the image forming apparatus 30 or 40, the toner serial number of the toner container mounted on the image forming apparatus 30 or 40, toner level history information, a predicted number of days to go, and an automatic ordering prohibition flag, in association with each of the image forming apparatuses 30 and 40.

The toner level history information indicates the history of an actually measured value of the toner level, representing the remaining amount of the toner in the image forming apparatus 30 or 40 (hereinafter, "toner level history"). The predicted number of days to go indicates the predicted number of days before the toner level in the image forming apparatus 30 or 40 reaches a predetermined level. The automatic ordering prohibition flag represents automatic ordering prohibition information, indicating whether automatic ordering of the toner by the device management system 20 is prohibited.

The device information 24D indicates the toner serial number, the toner level history information, and the predicted number of days to go, and the automatic ordering prohibition flag, with respect to each toner color. The automatic ordering prohibition flag indicates, when raised, that the automatic ordering is prohibited, and indicates that the automatic ordering is not prohibited, when laid down.

Fig. 5 shows a part of the content of the device information 24D. For example, the device information 24D indicates that the image forming apparatus 40 having the serial number "D00001" has the model name "M001" and the customer ID "C001". In addition, the toner serial numbers of the respective toner containers of cyan mounted in this image forming apparatus 40 are "TC00001" and "TC00002", the toner serial numbers of the respective toner containers of magenta are "TM00001" and "TM00002", the toner serial numbers of the respective toner containers of yellow are "TY00001" and "TY00002", and the toner serial numbers of the respective toner containers of black are "TB00001"and "TB00002".

The device information 24D further indicates that the date and time of the latest toner level history in the toner level history information is "10:10, February 5, 2024", that the latest toner level of cyan, magenta, yellow, and black is 49%, 42%, 63%, and 5%, respectively, and that the predicted number of days to go of cyan, magenta, yellow, and black is 45 days, 35 days, 50 days, and 5 days, respectively. In addition, the device information 24D indicates that the automatic ordering of cyan, magenta, and yellow is not prohibited, and that the automatic ordering of black is prohibited.

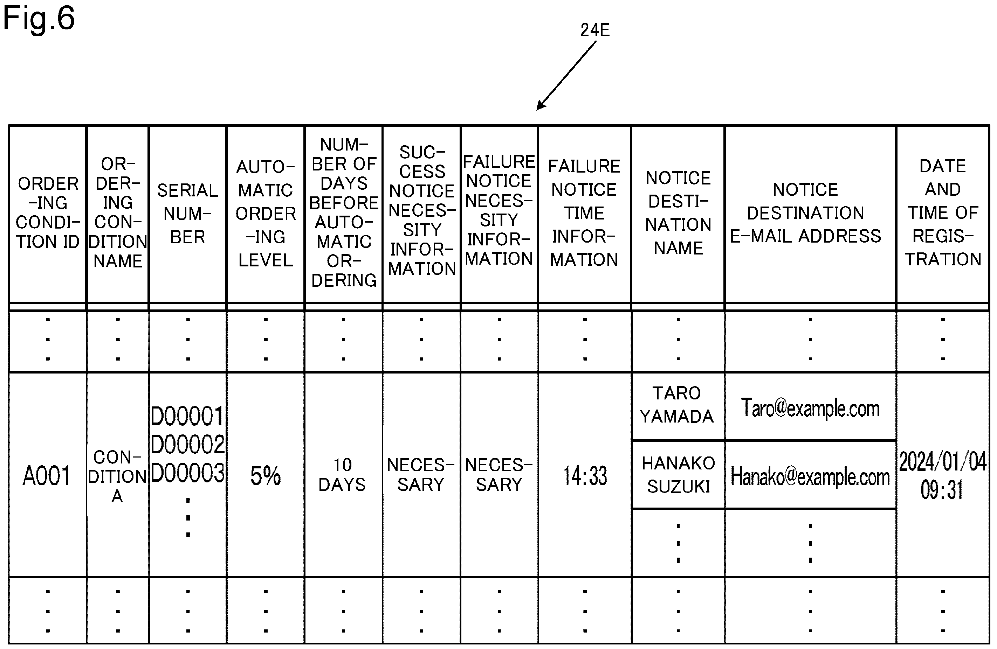

As shown in Fig. 2, the storage device 24 can store therein order condition information 24E, indicating automatic ordering conditions for the device management system 20 to automatically order the toner. Fig. 6 presents an example of the order condition information 24E.

As shown in Fig. 6, the order condition information 24E includes an ordering condition ID serving as the identification information of the automatic ordering condition, the ordering condition name, the serial number of the image forming apparatus 30 or 40 that is the subject of the automatic ordering condition, an automatic ordering level, the number of days before automatic ordering, success notice necessity information, failure notice necessity information, failure notice time information, the name and e-mail address of the destination of the information, and the date and time of registration of the automatic ordering condition, in association with each of the automatic ordering conditions.

The automatic ordering level refers to the reference toner level for executing the automatic ordering. The number of days before automatic ordering refers to the predicted number of days to go, used as the reference for executing the automatic ordering. The success notice necessity information indicates whether it is necessary to notify automatic ordering success information indicating that the automatic ordering has been successfully executed. The failure notice necessity information indicates whether it is necessary to notify automatic ordering failure information indicating that the automatic ordering has failed. The failure notice time information indicates the time of day that the automatic ordering failure information is to be notified.

Fig. 6 shows a part of the content of the order condition information 24E. For example, the order condition information 24E indicates that the automatic ordering condition having the ordering condition ID "A001", and the ordering condition name "Condition A", is to be applied to the image forming apparatus 30 or 40 having the serial number "D00001", "D00002", or "D00003", and indicates that the automatic ordering level is 5%, and that the number of days before automatic ordering is 10 days. The order condition information 24E also indicates that this automatic ordering condition specifies that the notice of the automatic ordering success information and the automatic ordering failure information is necessary, that the failure notice time is 14:33, that the information is to be notified to Mr. Taro Yamada having the e-mail address Taro@example.com, Ms. Hanako Suzuki having the e-mail address Hanako@example.com, and so forth, and that this condition was registered at 09:31 on January 4, 2024.

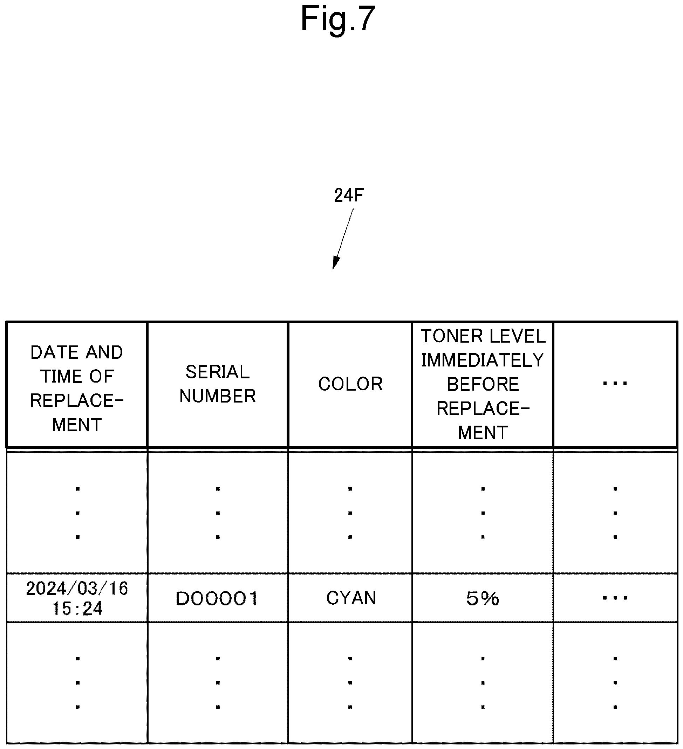

As shown in Fig. 2, the storage device 24 can store therein replacement history information 24F, indicating the history of replacement of the toner container (hereinafter, "replacement history"). Fig. 7 presents an example of the replacement history information 24F.

As shown in Fig. 7, the replacement history information 24F includes the date and time of the replacement of the toner container, the serial number of the image forming apparatus 30 or 40 that is the subject of the replacement of the toner container, the toner color of the replaced toner container, and the toner level immediately before the replacement of the toner container, with respect to each of the toner colors, in association with each of the replacement histories.

Fig. 7 shows a part of the content of the replacement history information 24F. For example, the replacement history information 24F indicates that the toner container of cyan, the toner level of which was 5% in the image forming apparatus 30 having the serial number "D00001", was replaced with a new toner container at 15:24 on March 16, 2024.

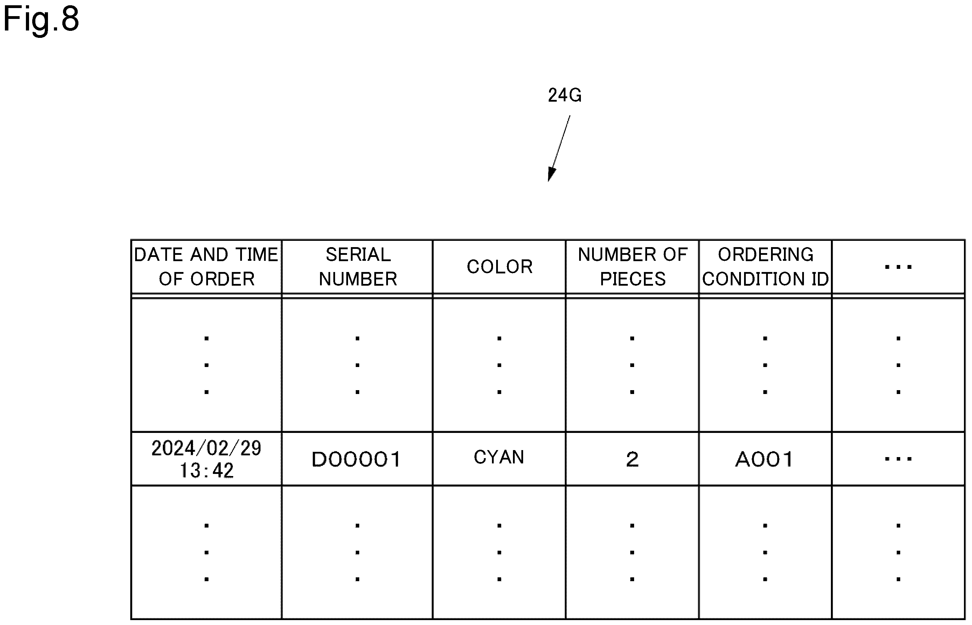

As shown in Fig. 2, the storage device 24 can store therein automatic ordering history information 24G, indicating the history of the automatic ordering of the toner container (hereinafter, "automatic ordering history"). Fig. 8 presents an example of the automatic ordering history information 24G.

As shown in Fig. 8, the automatic ordering history information 24G includes the date and time that the toner container was ordered, the serial number of the image forming apparatus 30 or 40 for which the toner container was ordered, the toner color of the toner container that was ordered, the number of pieces of the toner containers with respect to each of the toner colors, and the ordering condition ID of the automatic ordering condition used as the basis of the automatic ordering, in association with each of the automatic ordering histories.

Fig. 8 shows a part of the content of the automatic ordering history information 24G. For example, the automatic ordering history information 24G indicates that two toner containers of cyan were ordered for the image forming apparatus 30 having the serial number "D00001" at 13:42 on February 29, 2024, on the basis of the automatic ordering condition having the ordering condition ID "A001".

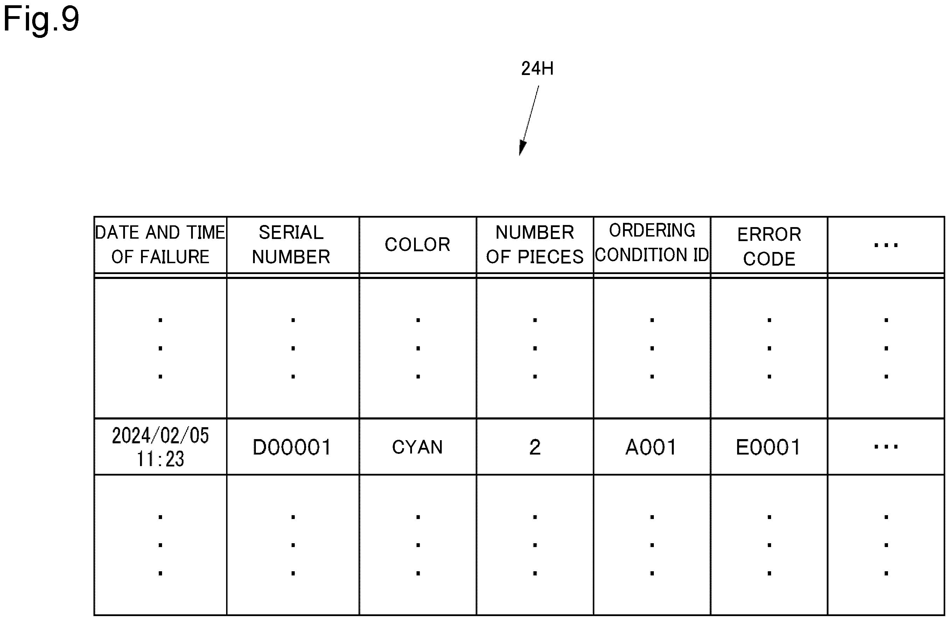

As shown in Fig. 2, the storage device 24 can store therein ordering failure history information 24H, indicating the history of the failure in automatic ordering (hereinafter, "ordering failure history"). Fig. 9 presents an example of the ordering failure history information 24H.

As shown in Fig. 9, the ordering failure history information 24H includes the date and time of the failure in automatic ordering, the serial number of the image forming apparatus 30, 40 corresponding to the failure in automatic ordering, the toner color that was automatically ordered, the number of pieces of the toner containers that were automatically ordered, the ordering condition ID of the automatic ordering condition used as the basis of the automatic ordering, and an error code indicating the reason of the failure in automatic ordering, in association with each of the ordering failure histories.

Fig. 9 shows a part of the content of the ordering failure history information 24H. For example, the ordering failure history information 24H indicates that, although two toner containers of cyan were ordered for the image forming apparatus 30 having the serial number "D00001", at 11:23 on February 5, 2024, on the basis of the automatic ordering condition having the ordering condition ID "A001", the order resulted in a failure for the reason indicated by the error code "E0001".

As shown in Fig. 2, the control device 25 includes, for example, a central processing unit (CPU), a read-only memory (ROM) containing programs and various types of data, and a random-access memory (RAM) serving as the operating region for the CPU of the control device 25. The CPU of the control device 25 executes the program stored in the storage device 24 or the ROM of the control device 25.

The control device 25 acts, by executing the device management program 24A, as an automatic ordering device 25A that automatically orders the toner to be used by the image forming apparatuses 30 and 40, to the external ordering system 50. The automatic ordering device 25A can automatically order the toner, exemplifying the consumables used by the image forming apparatuses 30 and 40, to the external ordering system 50. Accordingly, the device management program 24A corresponds to the consumables ordering program in the invention, and the device management system 20 corresponds to the consumables ordering system in the invention.

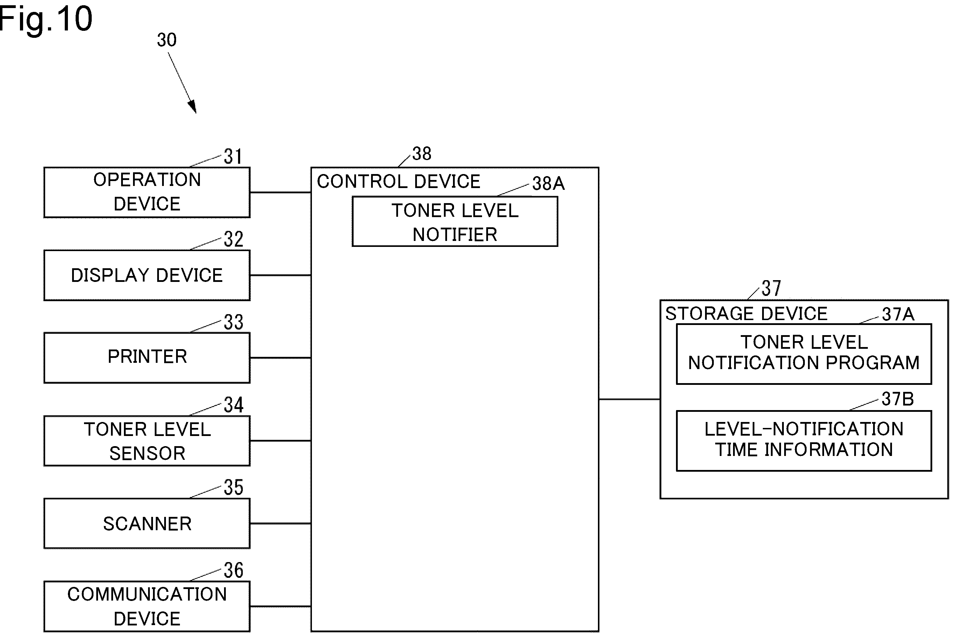

Fig. 10 is a block diagram showing a configuration of the image forming apparatus 30, not configured to receive a notice of the toner serial number. As shown in Fig. 10, the image forming apparatus 30 includes an operation device 31, a display device 32, a printer 33, a toner level sensor 34, a scanner 35, a communication device 36, a storage device 37, and a control device 38.

The operation device 31 includes, for example, buttons for inputting various operations. The display device 32 includes, for example, an LCD for displaying various types of information. The printer 33 prints an image on a recording medium such as a paper sheet. The toner level sensor 34 detects the level of the toner in the toner container mounted in the printer 33. The scanner 35 reads an image from a document.

The communication device 36 performs communication with an external device, via a network such as a LAN or the internet, or directly through wired or wireless communication. The storage device 37 includes a non-volatile memory unit such as a semiconductor memory or an HDD, for storing various types of information. The control device 38 controls the overall operation of the image forming apparatus 30.

The configuration of the printer 33 allows the toner container to be replaced. The toner level detected by the toner level sensor 34 is indicated as 100%, when a new toner container is mounted in the image forming apparatus 30.

The storage device 37 can store therein a toner level notification program 37A, for notifying the toner level to the device management system 20. The toner level notification program 37A may be, for example, installed in the image forming apparatus 30 during the manufacturing process thereof, additionally installed in the image forming apparatus 30 from an external storage medium such as a USB memory, or additionally installed in the image forming apparatus 30 from the network.

The storage device 37 can store therein level-notice time information 37B, indicating the level-notice time that the toner level is to be notified to the device management system 20. The level-notice time indicated by the level-notice time information 37B may be a predetermined time of day, or a plurality of predetermined times of day.

The control device 38 includes, for example, a CPU, a ROM containing programs and various types of data, and a RAM serving as the operation region for the CPU of the control device 38. The CPU of the control device 38 executes the program stored in the storage device 37 or the ROM of the control device 38.

The control device 38 acts, by executing the toner level notification program 37A, as a toner level notifier 38A that notifies the toner level to the device management system 20.

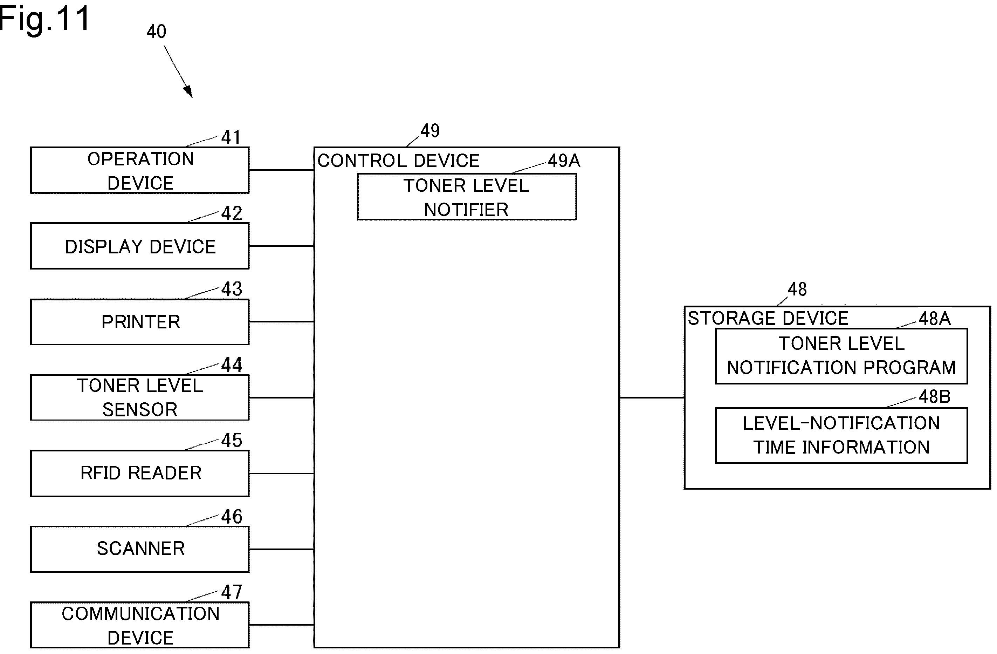

Fig. 11 is a block diagram showing a configuration of the image forming apparatus 40, configured to receive the notice of the toner serial number.

As shown in Fig. 11, the image forming apparatus 40 is different from the image forming apparatus 30, in additionally including an RFID reader 45. More specifically, the image forming apparatus 40 includes an operation device 41, a display device 42, a printer 43, a toner level sensor 44, the RFID reader 45, a scanner 46, a communication device 47, a storage device 48, and a control device 49.

The RFID reader 45 is a consumables identification information acquirer that acquires the toner serial number from a radio frequency identification (RFID) tag provided on the toner container mounted in the printer 43.

The storage device 48 can store therein a toner level notification program 48A, for notifying the toner level to the device management system 20. The toner level notification program 48A may be, for example, installed in the image forming apparatus 40 during the manufacturing process thereof, additionally installed in the image forming apparatus 40 from an external storage medium such as a USB memory, or additionally installed in the image forming apparatus 40 from the network. The storage device 48 can also store therein a level-notice time information 48B.

The control device 49 acts, by executing the toner level notification program 48A, as a toner level notifier 49A that notifies the toner level to the device management system 20.

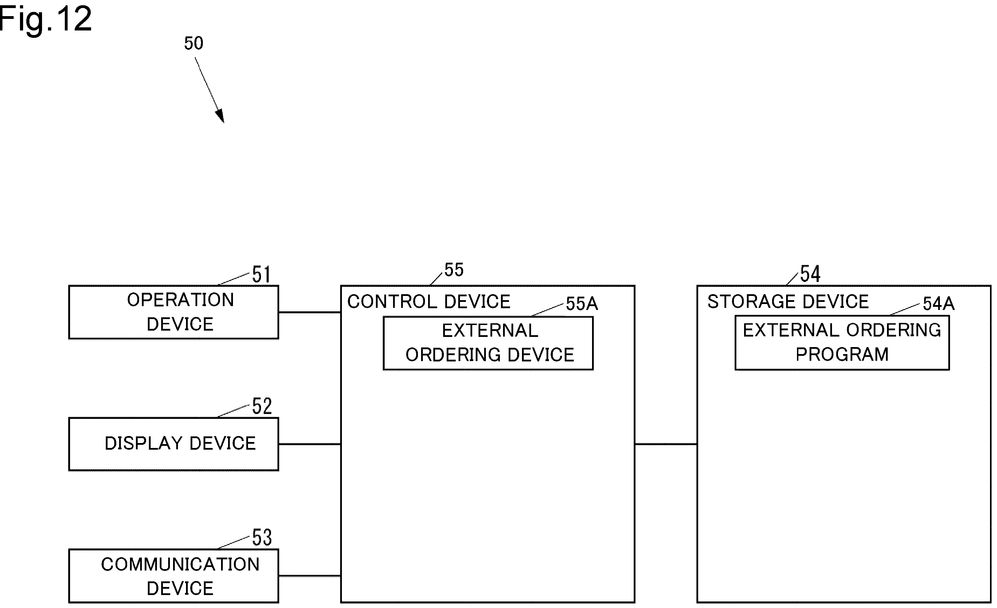

Fig. 12 is a block diagram showing a configuration of the external ordering system 50, constituted of a single computer. As shown in Fig. 12, the external ordering system 50 includes an operation device 51, a display device 52, a communication device 53, a storage device 54, and a control device 55.

The operation device 51 includes, for example, a keyboard and a mouse for inputting various operations. The display device 52 includes, for example, an LCD for displaying various types of information. The communication device 53 performs communication with an external device, via a network such as a LAN or the internet, or directly through wired or wireless communication. The storage device 54 includes a non-volatile memory unit such as a semiconductor memory or an HDD, for storing various types of information. The control device 55 controls the overall operation of the external ordering system 50.

The storage device 54 can store therein an external ordering program 54A, for ordering the toner outside the device management system 20. The external ordering program 54A may be, for example, installed in the external ordering system 50 during the manufacturing process thereof, additionally installed in the external ordering system 50 from an external storage medium such as a USB memory, or additionally installed in the external ordering system 50 from the network.

The control device 55 includes, for example, a CPU, a ROM containing programs and various types of data, and a RAM serving as the operation region for the CPU of the control device 55. The CPU of the control device 55 executes the program stored in the storage device 54 or the ROM of the control device 55.

The control device 55 acts, by executing the external ordering program 54A, as an external ordering device 55A that places the order for the toner, outside the device management system 20.

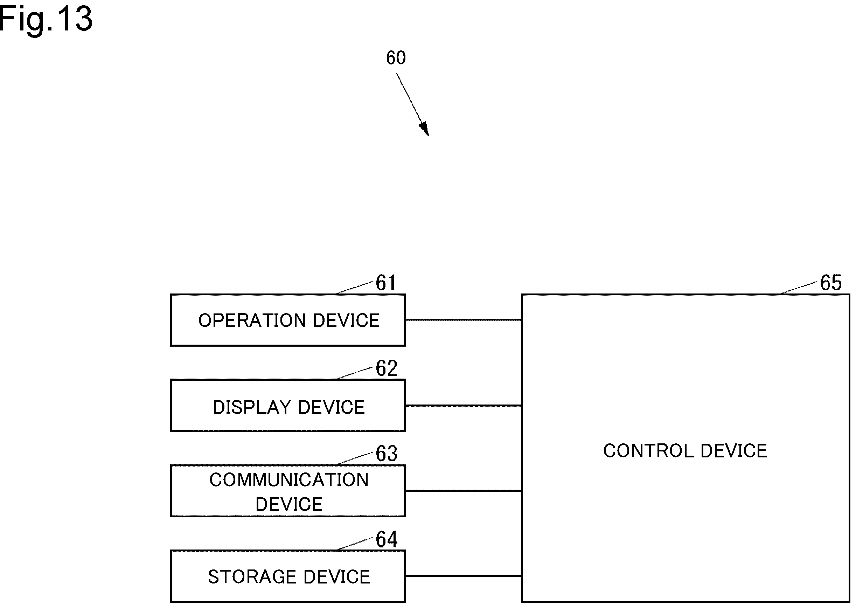

Fig. 13 is a block diagram showing a configuration of the user terminal 60 constituted of a PC. As shown in Fig. 13, the user terminal 60 includes an operation device 61, a display device 62, a communication device 63, a storage device 64, and a control device 65.

The operation device 61 includes, for example, a keyboard and a mouse for inputting various operations. The display device 62 includes, for example, an LCD for displaying various types of information. The communication device 63 performs communication with an external device, via a network such as a LAN or the internet, or directly through wired or wireless communication. The storage device 64 includes a non-volatile memory unit such as a semiconductor memory or an HDD, for storing various types of information. The control device 65 controls the overall operation of the user terminal 60.

The control device 65 includes, for example, a CPU, a ROM containing programs and various types of data, and a RAM serving as the operation region for the CPU of the control device 65. The CPU of the control device 65 executes the program stored in the storage device 64 or the ROM of the control device 65.

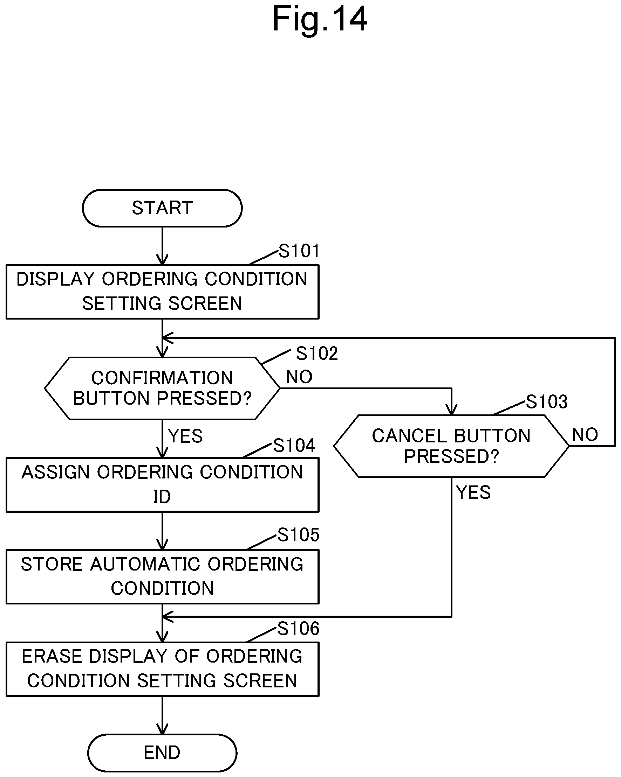

Hereunder, an operation of the system 10 will be described. First, an operation of the device management system 20 performed when setting the automatic ordering condition will be described. Fig. 14 is a flowchart showing the operation of the device management system 20, performed when setting the automatic ordering condition.

The user of the device management system 20, such as the service person in charge of the maintenance work for the image forming apparatuses 30 and 40, makes access to the device management system 20 using the user terminal 60, and instructs the device management system 20 to start the setting of the automatic ordering condition, via the operation device 61 of the user terminal 60.

Upon receipt of the instruction to start the setting of the automatic ordering condition, the automatic ordering device 25A of the device management system 20 executes the operation specified in Fig. 14.

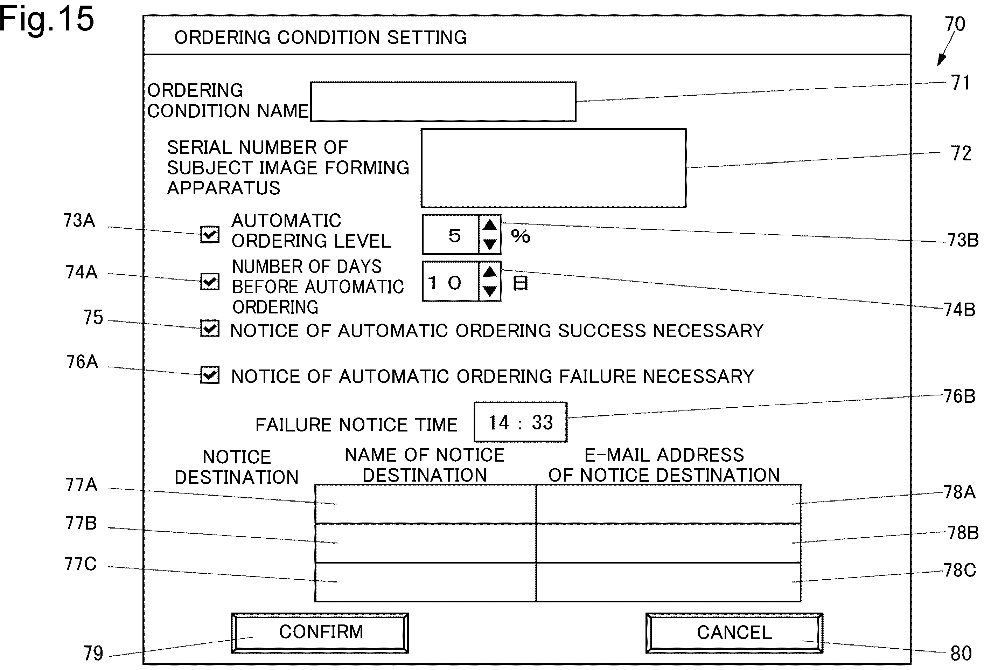

Referring to Fig. 14, the automatic ordering device 25A causes the display device 62 of the user terminal 60 to display an order condition setting screen 70 (see Fig. 15), to be used to set the automatic ordering condition (step S101). The order condition setting screen 70 can be operated through the operation device 61 of the user terminal 60.

Fig. 15 presents an example of the order condition setting screen 70, displayed by the operation specified in Fig. 14.

As shown in Fig. 15, the order condition setting screen 70 includes text boxes 71 and 72, check boxes 73A, 74A, 75, and 76A, spin boxes 73B and 74B, a text box 76B, text boxes 77A, 77B, and 77C, text boxes 78A, 78B, and 78C, a confirmation button 79, and a cancel button 80.

The text box 71 is a widget for inputting the ordering condition name. The text box 72 is a widget for inputting the serial number of the image forming apparatus 30 or 40 to which the automatic ordering condition is to be applied. The check box 73A is a widget for confirming the specified automatic ordering level. The spin box 73B is a widget for specifying the automatic ordering level.

The check box 74A is a widget for confirming the specified number of days before automatic ordering. The spin box 74B is a widget for specifying the number of days before automatic ordering. The check box 75 is a widget for selecting whether the notice of the automatic ordering success information is necessary. The check box 76A is a widget for selecting whether the notice of the automatic ordering failure information is necessary.

The text box 76B is a widget for inputting the failure notice time. The text boxes 77A, 77B, and 77C are widgets for inputting the name of the notice destination of the information. The text boxes 78A, 78B, and 78C are widgets for inputting the e-mail address of the notice destination of the information.

The confirmation button 79 is a widget for confirming the setting of the automatic ordering condition. The cancel button 80 is a widget for cancelling the setting of the automatic ordering condition.

Referring to Fig. 14, after step S101 the automatic ordering device 25A decides whether the confirmation button 79 has been pressed (step S102).

Upon deciding that the confirmation button 79 has not been pressed (NO at step S102), the automatic ordering device 25A decides whether the cancel button 80 has been pressed (step S103).

Upon deciding that the cancel button 80 has not been pressed (NO at step S103), the automatic ordering device 25A returns to step S102.

Upon deciding that the confirmation button 79 has been pressed (YES at step S102), the automatic ordering device 25A assigns the ordering condition ID of the automatic ordering condition to be specified this time (step S104).

After step S104, the automatic ordering device 25A stores the automatic ordering condition in the order condition information 24E (step S105). The automatic ordering condition includes the ordering condition ID assigned at step S104, the ordering condition name inputted in the text box 71 before the confirmation button 79 was pressed, and the serial number inputted in the text box 72 before the confirmation button 79 was pressed.

The automatic ordering condition also includes the automatic ordering level specified in the spin box 73B, in the case where the check box 73A was checked before the confirmation button 79 was pressed, and includes the number of days before automatic ordering specified in the spin box 74B, in the case where the check box 74A was checked before the confirmation button 79 was pressed.

Further, the automatic ordering condition includes the success notice necessity information, indicating whether the notice of the automatic ordering success information is necessary, and selected by the check box 75 before the confirmation button 79 was pressed, and the failure notice necessity information, indicating whether the notice of the automatic ordering failure information is necessary, and selected by the check box 76A before the confirmation button 79 was pressed.

Still further, the automatic ordering condition includes the failure notice time information, indicating the failure notice time inputted in the text box 76B before the confirmation button 79 was pressed, and the name and e-mail address of the notice destination of the information, inputted in the text boxes 77A, 77B, 77C, 78A, 78B, and 78C, before the confirmation button 79 was pressed. The mentioned items of the information included in the automatic ordering condition are each associated with the present date and time, corresponding to the date and time of registration of the automatic ordering condition.

Upon deciding that the cancel button 80 has been pressed (YES at step S103), or finishing the operation of step S105, the automatic ordering device 25A causes the display device 62 of the user terminal 60 to erase the display of the order condition setting screen 70 (step S106), and finishes the operation specified in Fig. 14.

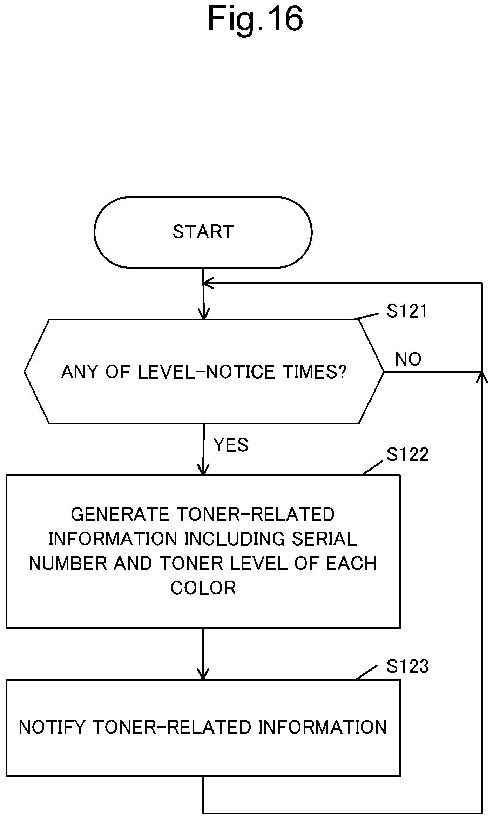

Hereunder, an operation of the image forming apparatus 30, performed when notifying the toner level, will be described. Fig. 16 is a flowchart showing the operation of the image forming apparatus 30, performed when notifying the toner level.

Referring to Fig. 16, the toner level notifier 38A of the image forming apparatus 30 repeatedly decides whether the current time of day corresponds to one of the level-notice times indicated by the level-notice time information 37B (NO at step S121), until deciding that the current time of day corresponds to one of the level-notice times indicated by the level-notice time information 37B.

Upon deciding that the current time of day corresponds to one of the level-notice times indicated by the level-notice time information 37B (YES at step S121), the toner level notifier 38A generates the toner-related information, including the serial number of the image forming apparatus 30, and the toner level of each color, namely cyan, magenta, yellow, and black, detected by the toner level sensor 34 (step S 122).

After step S122, the toner level notifier 38A notifies the toner-related information generated at step S122 to the device management system 20 (step S123), and returns to step S121.

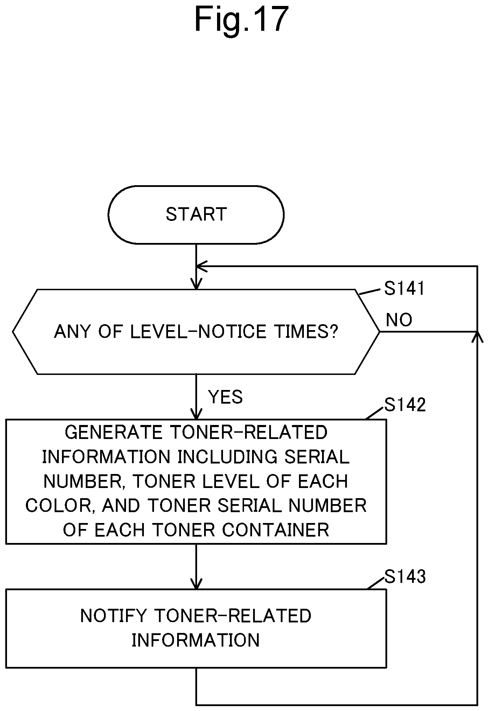

Hereunder, an operation of the image forming apparatus 40, performed when notifying the toner level, will be described. Fig. 17 is a flowchart showing the operation of the image forming apparatus 40, performed when notifying the toner level.

Referring to Fig. 17, the toner level notifier 49A of the image forming apparatus 40 repeatedly decides whether the current time of day corresponds to one of the level-notice times indicated by the level-notice time information 48B (NO at step S141), until deciding that the current time of day corresponds to one of the level-notice times indicated by the level-notice time information 48B.

Upon deciding that the current time of day corresponds to one of the level-notice times indicated by the level-notice time information 48B (YES at step S141), the toner level notifier 49A generates the toner-related information, including the serial number of the image forming apparatus 40, the toner level of each color, namely cyan, magenta, yellow, and black, detected by the toner level sensor 44, and the toner serial number of each of the toner containers mounted in the printer 43, read by the RFID reader 45 (step S142).

After step S142, the toner level notifier 49A notifies the toner-related information generated at step S142 to the device management system 20 (step S143), and returns to step S141.

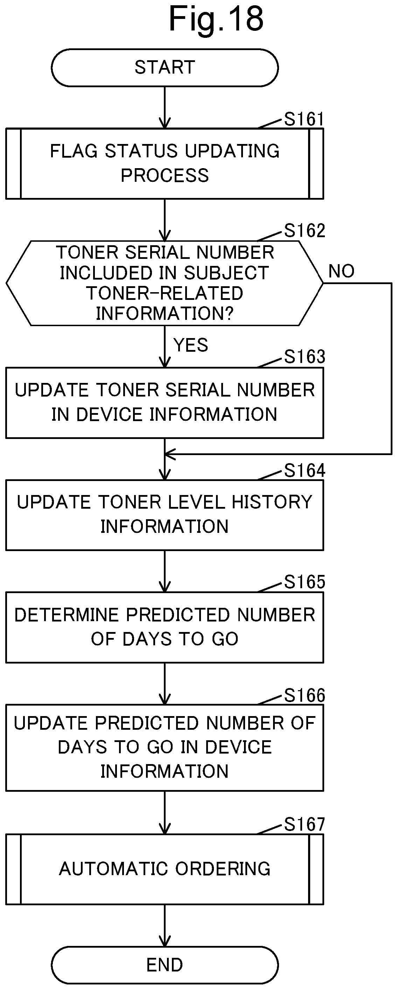

Hereunder, an operation of the device management system 20, performed upon receipt of the toner-related information, will be described. Fig. 18 is a flowchart showing the operation of the device management system 20, performed upon receipt of the toner-related information.

Upon receipt of the toner-related information, the automatic ordering device 25A of the device management system 20 executes the operation specified in Fig. 18.

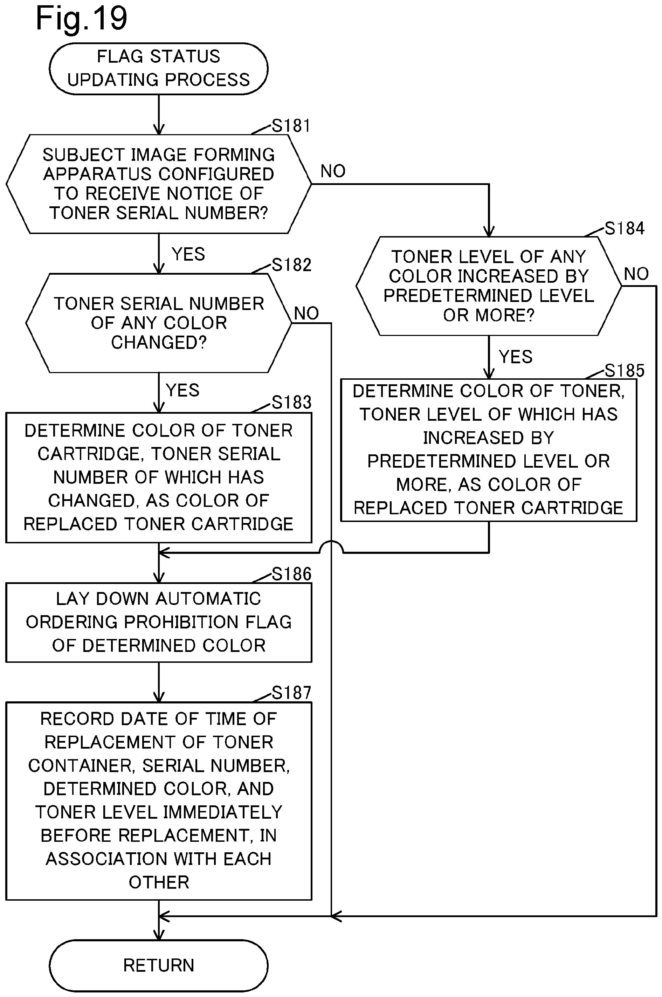

Referring to Fig. 18, the automatic ordering device 25A executes a flag status updating process (see Fig. 19), including updating the status of the automatic ordering prohibition flag, associated with the serial number indicated by the toner-related information that has been received (hereinafter, "subject toner-related information"), in the device information 24D (step S161).

Fig. 19 is a flowchart showing the flag status updating process included in Fig. 18. Referring to Fig. 19, the automatic ordering device 25A decides whether the image forming apparatus 30 or 40, identified on the basis of the serial number indicated by the subject toner-related information (hereinafter, "subject image forming apparatus") is configured to receive the notice of the toner serial number (step S181).

To be more specific, the automatic ordering device 25A identifies the model name associated with the serial number indicated by the subject toner-related information in the device information 24D, and makes the decision of step S181, on the basis of the toner serial number support information associated with the model name identified, in the model information 24B.

Upon deciding that the subject image forming apparatus 40 is configured to receive the notice of the toner serial number (YES at step S181), the automatic ordering device 25A decides whether there is any toner color, the toner serial number of which, indicated by the subject toner-related information, has changed from the toner serial number associated with the serial number indicated by the subject toner-related information, in the device information 24D (step S182).

Upon deciding that there is a toner color, the toner serial number of which has changed (YES at step S182), the automatic ordering device 25A determines that the toner color of the toner cartridge, the toner serial number of which has changed, is the toner color of the replaced toner cartridge (step S183).

Upon deciding that the subject image forming apparatus 30 is not configured to receive the notice of the toner serial number (NO at step S181), the automatic ordering device 25A decides whether there is any color, the toner level of which indicated by the subject toner-related information has increased by equal to or more than a predetermined level, from the latest toner level indicated by the toner level history information, associated with the serial number indicated by the subject toner-related information, in the device information 24D (step S184).

The "predetermined level" at step S184 may be, for example, 60%. In the case where the "predetermined level" at step S184 is 60%, the automatic ordering device 25A decides at step S184 that, for example when the latest toner level of cyan, indicated by the toner level history information associated with the serial number indicated by the subject toner-related information in the device information 24D is 5%, and the toner level of cyan indicated by the subject toner-related information is 65%, the toner level of cyan indicated by the subject toner-related information has increased by 60%, from the latest toner level.

Upon deciding that there is a color the toner level of which, indicated by the subject toner-related information, has increased by equal to or more than the predetermined level, from the latest toner level (YES at step S184), the automatic ordering device 25A determines that the toner color, the toner level of which, indicated by the subject toner-related information, has increased by equal to or more than the predetermined level, from the latest toner level, is the toner color of the replaced toner cartridge (step S185).

After step S183 or step S185, the automatic ordering device 25A lays down the automatic ordering prohibition flag of the color determined at step S183 or step S185, among the automatic ordering prohibition flags associated with the serial number indicated by the subject toner-related information, in the device information 24D (step S186).

After step S186, the automatic ordering device 25A records the present date and time, representing the date and time of replacement of the toner container, the serial number indicated by the subject toner-related information, the color determined at step S183 or step S185, and the toner level immediately before the replacement of the toner container, in the replacement history information 24F in association with each other (step S187).

At this point, the automatic ordering device 25A sets the latest toner level associated with the color determined at S183 or step S185, in the toner level history information associated with the serial number indicated by the subject toner-related information, in the device information 24D, as the toner level immediately before the replacement of the toner container.

Upon deciding that there is no toner color, the toner serial number of which, indicated by the subject toner-related information, has changed from the toner serial number associated with the serial number indicated by the subject toner-related information, in the device information 24D (NO at step S182), or deciding that there is no toner color, the toner level of which indicated by the subject toner-related information has increased by equal to or more than the predetermined level, from the latest toner level indicated by the toner level history information, associated with the serial number indicated by the subject toner-related information, in the device information 24D (NO at step S184), or finishing the operation of step S 187, the automatic ordering device 25A finishes the flag status updating process specified in Fig. 19.

Referring again to Fig. 18, after executing the flag status updating process of step S161, the automatic ordering device 25A decides whether the subject toner-related information includes the toner serial number (step S162).

Upon deciding that the subject toner-related information includes the toner serial number (YES at step S162), the automatic ordering device 25A overwrites the toner serial number associated with the serial number indicated by the subject toner-related information, in the device information 24D, with the toner serial number indicated by the subject toner-related information, thereby updating the toner serial number associated with the serial number indicated by the subject toner-related information, in the device information 24D (step S163).

Upon deciding that the subject toner-related information does not include the toner serial number (NO at step S162), or finishing the operation of step S163, the automatic ordering device 25A adds the toner level history based on the toner level indicated by the subject toner-related information, to the toner level history information associated with the serial number indicated by the subject toner-related information, in the device information 24D, thereby updating the toner level history information associated with the serial number indicated by the subject toner-related information, in the device information 24D (step S164).

After step S164, the automatic ordering device 25A determines the predicted number of days to go, on the basis of the toner level history information associated with the serial number indicated by the subject toner-related information, in the device information 24D (step S165).

For example, the automatic ordering device 25A may determine the predicted number of days to go using an approximate straight line based on the toner level history information, or by repeatedly using a machine learning model that outputs, when an explanatory variable based on the toner level history is inputted, a toner level of a date ahead of the latest date included in the toner level history, as the response variable.

After step S165, the automatic ordering device 25A overwrites the predicted number of days to go associated with the serial number indicated by the subject toner-related information in the device information 24D, with the predicted number of days to go determined at step S165, thereby updating the predicted number of days to go associated with the serial number indicated by the subject toner-related information in the device information 24D (step S166).

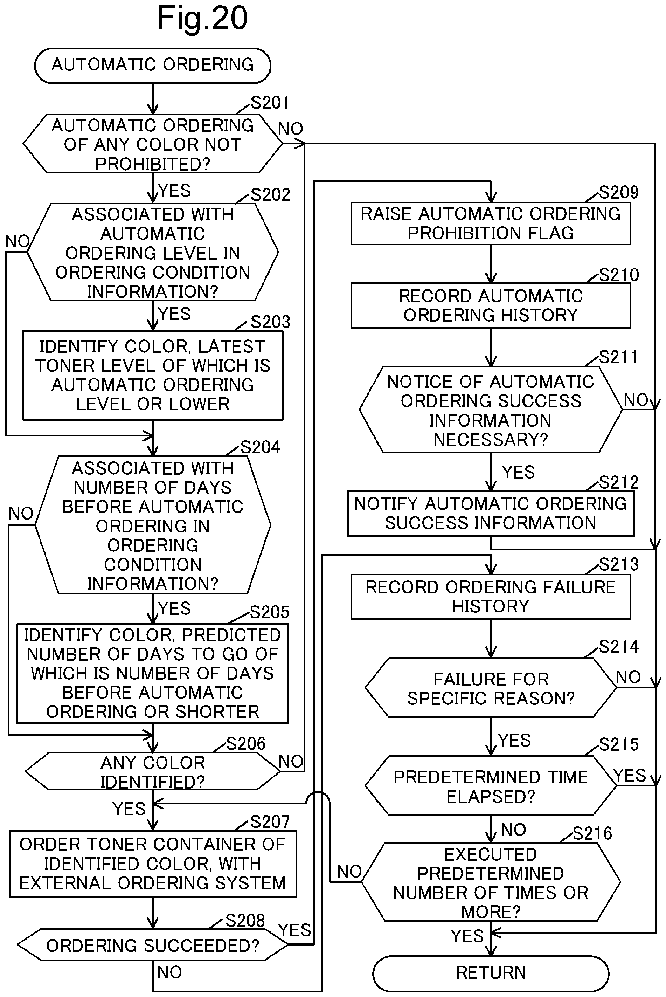

After step S166, the automatic ordering device 25A executes an automatic ordering process (see Fig. 20) for automatically placing the order (step S167). Fig. 20 is a flowchart showing the automatic ordering process included in Fig. 18.

Referring to Fig. 20, the automatic ordering device 25A decides whether there is any color, the automatic ordering of which is not prohibited, on the basis of the status of the automatic ordering prohibition flag, associated with the serial number indicated by the subject toner-related information in the device information 24D (step S201).

Upon deciding that there is a color the automatic ordering of which is not prohibited (YES at step S201), the automatic ordering device 25A decides whether the automatic ordering level is associated with the serial number indicated by the subject toner-related information, in the order condition information 24E (step S202).

Upon deciding that the automatic ordering level is associated with the serial number indicated by the subject toner-related information, in the order condition information 24E (YES at step S202), the automatic ordering device 25A identifies, among the colors decided at step S201 that the automatic ordering is not prohibited, the color the latest toner level of which, indicated by the toner level history information associated with the serial number indicated by the subject toner-related information in the device information 24D, is equal to or lower than the automatic ordering level associated with the serial number indicated by the subject toner-related information, in the order condition information 24E (step S203).

Upon deciding that the automatic ordering level is not associated with the serial number indicated by the subject toner-related information, in the order condition information 24E (NO at step S202), or finishing the operation of step S203, the automatic ordering device 25A decides whether the number of days before automatic ordering is associated with the serial number indicated by the subject toner-related information, in the order condition information 24E (step S204).

Upon deciding that the number of days before automatic ordering is associated with the serial number indicated by the subject toner-related information, in the order condition information 24E (YES at step S204), the automatic ordering device 25A identifies, among the colors decided at step S201 that the automatic ordering is not prohibited, the color the predicted number of days to go of which, associated with the serial number indicated by the subject toner-related information in the device information 24D, is equal to or fewer than the number of days before automatic ordering, associated with the serial number indicated by the subject toner-related information in the order condition information 24E (step S205).

Upon deciding that the number of days before automatic ordering is not associated with the serial number indicated by the subject toner-related information, in the order condition information 24E (NO at step S204), or finishing the operation of step S205, the automatic ordering device 25A decides whether any color has been identified, at step S203 or step S205 (step S206).

Upon deciding that a color has been identified at step S203 or step S205 (YES at step S206), the automatic ordering device 25A places the order for the toner container of the color identified at step S203 or step S205, with the external ordering system 50 (step S207).

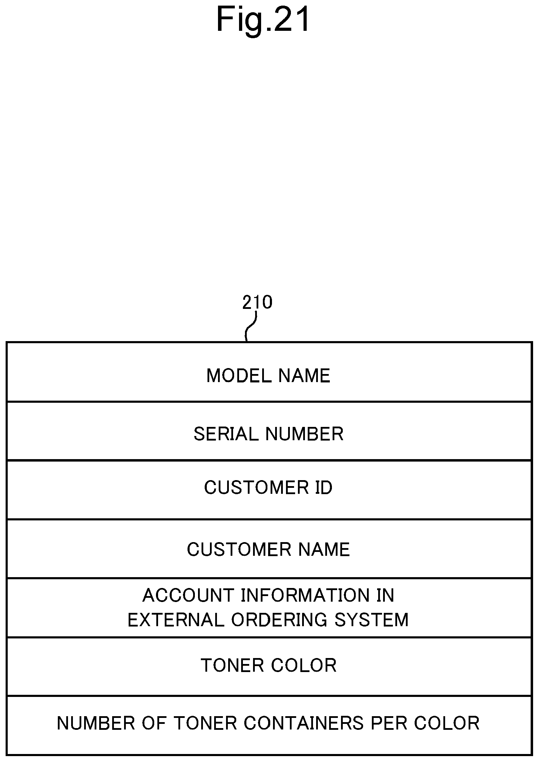

Fig. 21 is a table showing various types of information included in the ordering information of the toner container to the external ordering system 50.

As shown in Fig. 21, the ordering information 210 related to step S207 includes the model name of the image forming apparatus 30 or 40 relevant to the order, the serial number of the image forming apparatus 30 or 40 relevant to the order, the customer ID, the customer name, and the account information in the external ordering system 50 of the customer using the image forming apparatus 30 or 40 relevant to the order, the color of the ordered toner, and the number of pieces of the toner containers of the ordered toner color.

The automatic ordering device 25A decides the number of pieces of the toner containers with respect to each of the ordered toner colors, on the basis of the mountable toner information associated in the model information 24B with the model name, associated with the serial number of the image forming apparatus 30 or 40 relevant to the order, in the device information 24D.

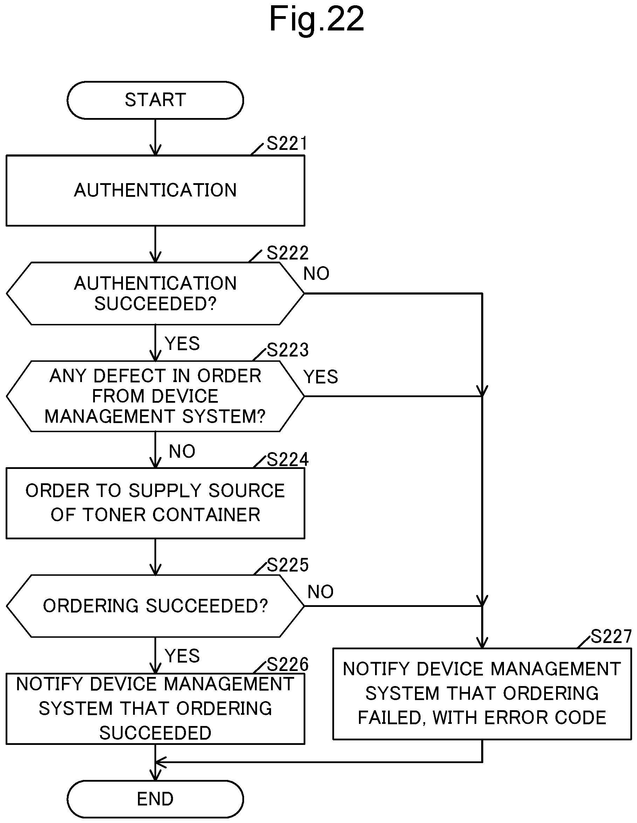

Fig. 22 is a flowchart showing an operation of the external ordering system 50, performed when the toner is ordered from the device management system 20. The external ordering device 55A of the external ordering system 50 executes the operation specified in Fig. 22, when the device management system 20 places the order for the toner.

As shown in Fig. 22, the external ordering device 55A performs authentication, on the basis of the account information included in the ordering information 210 about the toner, from the device management system 20 (step S221).

After step S221, the external ordering device 55A decides whether the authentication at step S221 has been successfully done (step S222).

Upon deciding that the authentication has been successfully done (YES at step S222), the external ordering device 55A decides whether the ordering information 210 about the toner from the device management system 20 has any defect (step S223).

Upon deciding that the ordering information 210 about the toner from the device management system 20 has no defect (NO at step S223), the external ordering device 55A places the order for the toner ordered from the device management system 20, with the supply source of the toner container (step S224).

After step S224, the external ordering device 55A decides whether the order of step S224 has been successfully placed (step S225). For example, upon receipt of a notice from the supply source of the toner container to the effect that the order of step S224 has been successfully received, the external ordering device 55A decides that the order of step S224 has been successfully placed.

In contrast, in the case where the external ordering device 55A has received a notice from the supply source of the toner container to the effect that the order of step S224 has failed, or where the notice of success or failure of the order of step S224 has not been received from the supply source of the toner container, despite a predetermined period of time having elapsed after the order of step S224 was placed, the external ordering device 55A decides that the order of step S224 has failed.

Upon deciding that the order of step S224 has been successfully placed (YES at step S225), the external ordering device 55A notifies the device management system 20 that the order of the toner from the device management system 20 has been successfully placed (step S226).

Upon deciding that the authentication of step S221 has failed (NO at step S222), that the ordering information 210 about the toner from the device management system 20 has a defect (YES at step S223), or that the order of step S224 has failed (NO at step S225), the external ordering device 55A notifies the device management system 20 that the order of the toner from the device management system 20 has failed, along with an error code corresponding to the reason of the failure (step S227).

Examples of the reason of the failure include the case where the authentication of the account information, included in the ordering information 210 about the toner from the device management system 20, by the external ordering system 50 has failed, and where the setting specified by the external ordering system 50, which is necessary when the external ordering system 50 places the order for the toner container with the supply source of the toner container, has a defect.

Upon finishing the operation of step S226 or step S227, the external ordering device 55A finishes the operation specified in Fig. 22.

Referring again to Fig. 20, after step S207, the automatic ordering device 25A of the device management system 20 decides whether the order of step S207 has been successfully placed (step S208).

For example, in the case where the success of the order of step S207 is notified from the external ordering system 50, the automatic ordering device 25A decides that the order of step S207 has been successfully placed.

In contrast, in the case where the automatic ordering device 25A has received a notice from the external ordering system 50 to the effect that the order of step S207 has failed, or where the notice of success or failure of the order of step S207 has not been received from the external ordering system 50, despite a predetermined period of time having elapsed after the order of step S207 was placed, the automatic ordering device 25A decides that the order of step S207 has failed.

Upon deciding that the order of step S207 has been successfully placed (YES at step S208), the automatic ordering device 25A raises the automatic ordering prohibition flag of the color ordered at step S207, among the automatic ordering prohibition flags associated with the serial number of the image forming apparatus 30 or 40 relevant to the order of step S207, in the device information 24D (step S209).

After step S209, the automatic ordering device 25A records the automatic ordering history representing the order of step S207, in the automatic ordering history information 24G (step S210). To be more specific, the automatic ordering device 25A records the present date and time, representing the date and time that the order has been placed, the serial number of the image forming apparatus 30 or 40 relevant to the order, the color of the toner ordered, the number of pieces of the toner containers of each color of the toner ordered, and the ordering condition ID of the order, in association with each other, in the automatic ordering history information 24G.

After step S210, the automatic ordering device 25A decides whether the success notice necessity information, associated with the serial number indicated by the subject toner-related information in the order condition information 24E, is indicating that the notice of the automatic ordering success information is necessary (step S211).

Upon deciding that the success notice necessity information is indicating that the notice of the automatic ordering success information is necessary (YES at step S211), the automatic ordering device 25A notifies the automatic ordering success information by e-mail, to the e-mail address of the notice destination associated with the serial number indicated by the subject toner-related information in the order condition information 24E (step S212).

The automatic ordering device 25A may use the name of the notice destination, associated with the serial number indicated by the subject toner-related information in the order condition information 24E, for example in the main text of the e-mail of step S212.

Upon deciding that the order of step S207 has failed (NO at step S208), the automatic ordering device 25A records the ordering failure history representing the order of step S207, in the ordering failure history information 24H (step S213).

To be more specific, the automatic ordering device 25A records the present date and time, representing the date and time that the ordering has failed, the serial number of the image forming apparatus 30 or 40 relevant to the order, the color of the toner ordered, the number of pieces of the toner containers of each color of the toner ordered, the ordering condition ID of the order, and the error code indicating the reason of the ordering failure, in association with each other, in the ordering failure history information 24H.

After step S213, the automatic ordering device 25A decides whether the reason of the ordering failure of step S207 is a specific reason (step S214). In this case, the specific reason may be, for example, that the automatic ordering has failed owing to an interruption of the network.

Upon deciding that the reason of the ordering failure of step S207 is the specific reason (YES at step S214), the automatic ordering device 25A decides whether, in the current automatic ordering process, a predetermined time has elapsed after the first execution of the operation of step S207 (step S215).

Upon deciding that the predetermined time has not elapsed after the first execution of the operation of step S207, in the current automatic ordering process (NO at step S215), the automatic ordering device 25A decides whether the operation of step S207 has been executed a predetermined number of times, in the current automatic ordering process (step S216).

Upon deciding that the operation of step S207 has not been executed the predetermined number of times, in the current automatic ordering process (NO at step S216), the automatic ordering device 25A executes the operation of step S207.

The automatic ordering device 25A finishes the automatic ordering process, upon deciding that there is no color the automatic ordering of which is not prohibited (NO at step S201), or that no color has been identified at step S203 or step S205 (NO at step S206), or that the success notice necessity information is not indicating that the notice of the automatic ordering success information is necessary (NO at step S211), or finishing the operation of step S212, or deciding that the reason of the ordering failure is not the specific reason (NO at step S214), or that the predetermined time has elapsed after the first execution of the operation of step S207 (YES at step S215), or that the operation of step S207 has been executed the predetermined number of times (YES at step S216).

As shown in Fig. 18, the automatic ordering device 25A finishes the operation specified therein, upon finishing the automatic ordering process of step S167.

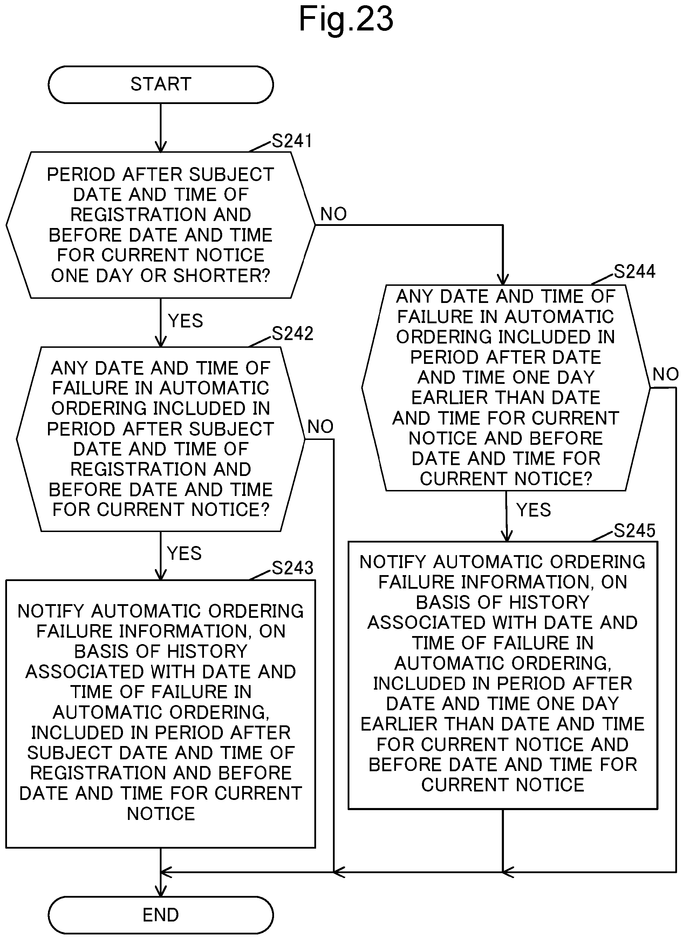

Hereunder, an operation of the device management system 20, performed when notifying the automatic ordering failure information, will be described. Fig. 23 is a flowchart showing an operation of the device management system 20, performed when notifying the automatic ordering failure information.

The automatic ordering device 25A of the device management system 20 executes the operation specified in Fig. 23, each time the current time of day passes the failure notice time indicated by the failure notice time information in the order condition information 24E, with respect to the automatic ordering condition in which the failure notice necessity information is indicating that the notice of the automatic ordering failure information is necessary, in the order condition information 24E. Hereinafter, the present date and time corresponding to the current failure notice time will be referred to as date and time for current notice.

Referring to Fig. 23, automatic ordering device 25A decides whether the period of time before the date and time for current notice, after the date and time of registration associated with the automatic ordering condition for the current operation (hereinafter, "subject automatic ordering condition"), in the order condition information 24E (hereinafter, "subject date and time of registration"), is equal to or shorter than one day (step S241).

Upon deciding that the period of time after the subject date and time of registration and before the date and time for current notice is equal to or shorter than one day (YES at step S241), the automatic ordering device 25A decides whether there is a date and time of failure in automatic ordering, associated with the ordering condition ID of the subject automatic ordering condition in the ordering failure history information 24H, and included in the period after the subject date and time of registration and before the date and time for current notice (step S242).

Upon deciding that there is a date and time of failure in automatic ordering, included in the period after the subject date and time of registration and before the date and time for current notice (YES at step S242), the automatic ordering device 25A notifies the automatic ordering failure information by e-mail, to the e-mail address of the notice destination associated with the ordering condition ID of the subject automatic ordering condition in the order condition information 24E, on the basis of the ordering failure history associated with each of the ordering condition ID of the subject automatic ordering condition in the ordering failure history information 24H, and the date and time of failure in automatic ordering included in the period after the subject date and time of registration and before the date and time for current notice (step S243).

The automatic ordering device 25A may use the name of the notice destination, associated with the ordering condition ID of the subject automatic ordering condition in the order condition information 24E, for example in the main text of the e-mail of step S243.

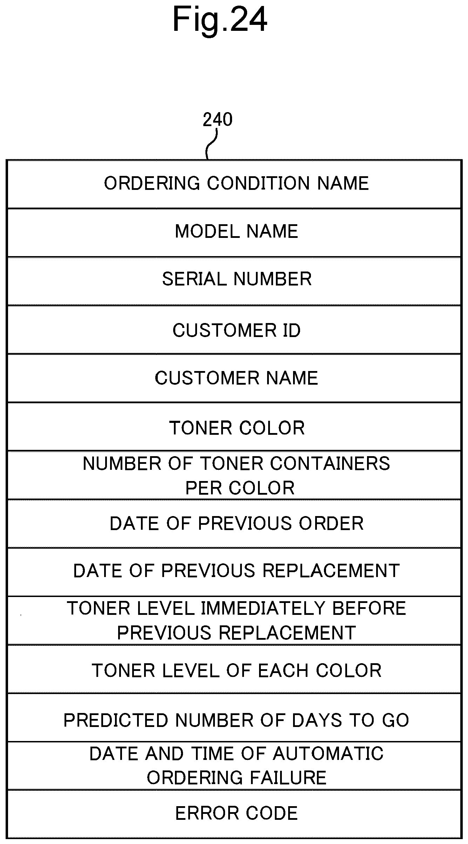

The automatic ordering device 25A includes the items specified in Fig. 24, in the automatic ordering failure information of step S243. The automatic ordering device 25A may include the items shown in Fig. 24 in the e-mail of step S243, for example as an attached file of a comma-separated values (CSV) file format.

Fig. 24 is a table showing various types of information included in the automatic ordering failure information 240 notified during the operation specified in Fig. 23.

As shown in Fig. 24, the automatic ordering failure information 240 includes, as items related to the automatic ordering failure, the ordering condition name, the model name and serial number of the image forming apparatus 30 or 40, the customer ID and the name of the customer using the image forming apparatus 30 or 40, the color of the toner automatically ordered, the number of pieces of the toner containers for each toner color automatically ordered, the date of the previous order of the toner container, the date of the previous replacement, and the toner level immediately before the replacement, of the colors to be automatically ordered for the image forming apparatus 30 or 40, the toner level of each color and the predicted number of days to go of each color in the image forming apparatus 30 or 40, the date and time of failure in automatic ordering, and the error code indicating the reason of the failure in automatic ordering. The error code is provided with respect to each date and time of failure in automatic ordering.

For example, in the case where a person intends, upon receipt of the automatic ordering failure information 240, to make access to the device management system 20 to investigate in detail the reason of the failure in automatic ordering, relevant to the automatic ordering failure information 240, the person can confirm various types of information, using the ordering condition name included in the automatic ordering failure information 240.

For example, the person who has received the automatic ordering failure information 240 can decide, when the period after the date of the previous order of the toner container until the date of the previous replacement of the toner container is equal to or longer than a predetermined number of days, that the previous order of the toner container was placed too early.

As another example, the person who has received the automatic ordering failure information 240 can decide, when the toner level immediately before the previous replacement of the toner container is equal to or higher than a predetermined toner level, that the previous replacement of the toner container was too early.

The error code shown in Fig. 24 may represent, in addition to the cases received from the external ordering system 50, the case where the uniform resource locator (URL) for making access to the external ordering system 50 was wrong, and where the notice of success or failure has not been received from the external ordering system 50, despite a predetermined time having elapsed after executing the automatic ordering (i.e., timeout).

Referring again to Fig. 23, upon deciding that the period after the subject date and time of registration and before the date and time for current notice is longer than one day (NO at step S241), the automatic ordering device 25A decides whether there is a date and time of failure in automatic ordering, associated with the ordering condition ID of the subject automatic ordering condition in the ordering failure history information 24H, and included in the period after the date and time one day earlier than the date and time for current notice, and before the date and time for current notice (step S244).

Upon deciding that there is a date and time of failure in automatic ordering, included in the period after the date and time one day earlier than the date and time for current notice, and before the date and time for current notice (YES at step S244), the automatic ordering device 25A notifies the automatic ordering failure information by e-mail, to the e-mail address of the notice destination associated with the ordering condition ID of the subject automatic ordering condition in the order condition information 24E, on the basis of the ordering failure history associated with each of the ordering condition ID of the subject automatic ordering condition in the ordering failure history information 24H, and the date and time of failure in automatic ordering included in the period after the date and time one day earlier than the date and time for current notice, and before the date and time for current notice (step S245).

The automatic ordering device 25A may use the name of the notice destination, associated with the ordering condition ID of the subject automatic ordering condition in the order condition information 24E, for example in the main text of the e-mail of step S245. The automatic ordering device 25A includes the items specified in Fig. 24, in the automatic ordering failure information of step S245. The automatic ordering device 25A may include the items shown in Fig. 24 in the e-mail of step S245, for example as an attached file of a CSV file format.

The automatic ordering device 25A finishes the operation specified in Fig. 23, upon deciding that there is no date and time of failure in automatic ordering included in the period after the subject date and time of registration and before the date and time for current notice (NO at step S242), or finishing the operation of step S243, or deciding that there is no date and time of failure in automatic ordering, included in the period after the date and time one day earlier than the date and time for current notice, and before the date and time for current notice (NO at step S244), or finishing the operation of step S245.

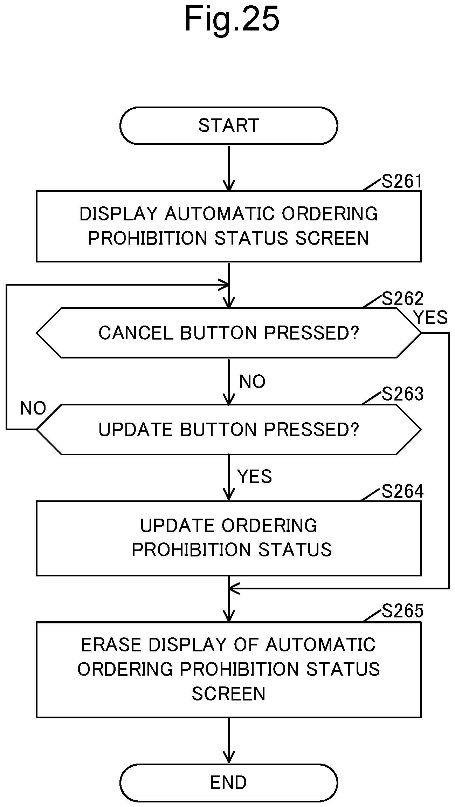

Hereunder, an operation of the device management system 20, performed when the status of the automatic ordering prohibition flag is manually changed, will be described. Fig. 25 is a flowchart showing the operation of the device management system 20, performed when the status of an automatic ordering prohibition flag is manually changed.

The user of the device management system 20, such as the service person in charge of the maintenance work for the image forming apparatuses 30 and 40, can instruct, after making access to the device management system 20 using the user terminal 60, the device management system 20 to display an automatic ordering prohibition status screen, indicating whether the automatic ordering is prohibited, through the operation device 61 of the user terminal 60.

Upon receipt of the instruction to display the automatic ordering prohibition status screen, the automatic ordering device 25A of the device management system 20 executes the operation specified in Fig. 25.

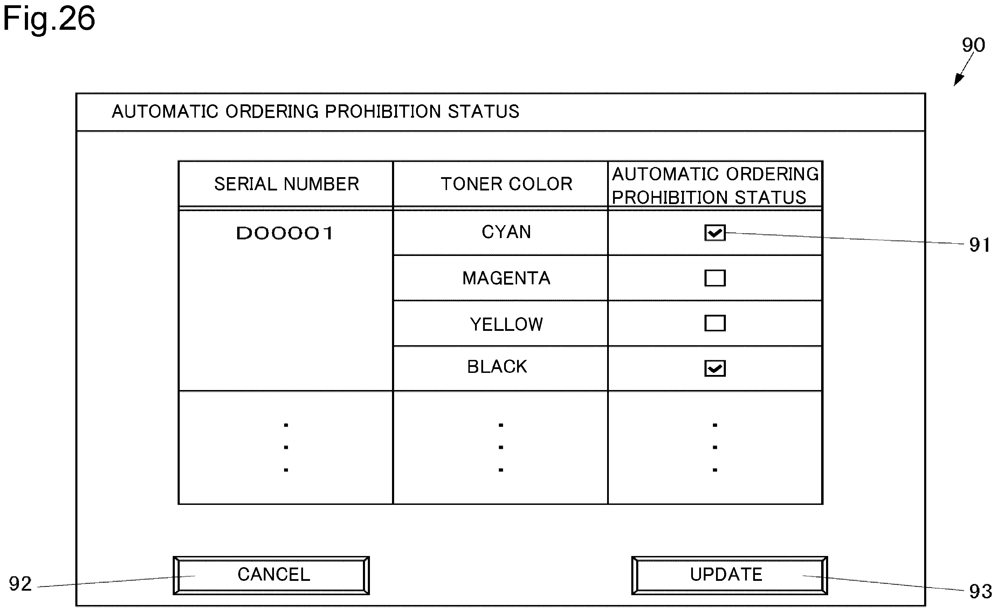

Referring to Fig. 25, automatic ordering device 25A causes the display device 62 of the user terminal 60 to display the automatic ordering prohibition status screen 90 shown in Fig. 26 (step S261). The automatic ordering prohibition status screen 90 can be operated, through the operation device 61 of the user terminal 60.

Fig. 26 presents an example of the automatic ordering prohibition status screen 90, displayed by the operation specified in Fig. 25.

As shown in Fig. 26, the automatic ordering prohibition status screen 90 includes check boxes 91 which are widgets for selecting whether the automatic ordering is prohibited (hereinafter, "automatic ordering prohibition check box"). The automatic ordering prohibition status screen 90 may include one or more automatic ordering prohibition check boxes, in addition to the automatic ordering prohibition check boxes 91.

The automatic ordering prohibition status screen 90 includes one automatic ordering prohibition check box 91, for each of the toner colors of the image forming apparatuses 30 and 40. The automatic ordering prohibition status screen 90 distinguishes between the image forming apparatuses 30 and 40, by indicating the serial number of the image forming apparatuses 30 and 40. Fig. 26 shows a part of the content of the automatic ordering prohibition status screen 90.

When starting the display of the automatic ordering prohibition status screen 90, the automatic ordering device 25A sets the status of the automatic ordering prohibition check boxes 91, according to the status of the automatic ordering prohibition flags in the device information 24D.

To be more specific, the automatic ordering device 25A puts a check mark in the automatic ordering prohibition check box corresponding to the toner color of the image forming apparatus 30 or 40, about which the automatic ordering prohibition flag is raised in the device information 24D, at the time that the automatic ordering prohibition status screen 90 is displayed. In contrast, the automatic ordering device 25A leaves the automatic ordering prohibition check box blank, for the toner color of the image forming apparatus 30 or 40, about which the automatic ordering prohibition flag is laid down in the device information 24D, at the time that the automatic ordering prohibition status screen 90 is displayed.

The user of the device management system 20 can change the check mark in the automatic ordering prohibition check box, through the operation device 61 of the user terminal 60.

The automatic ordering prohibition status screen 90 also includes a cancel button 92, which is a widget for suspending the updating of the status of the automatic ordering prohibition flag, and an update button 93 which is a widget for executing the updating of the status of the automatic ordering prohibition flag.

Referring again to Fig. 25, after step S261, the automatic ordering device 25A decides whether the cancel button 92 has been pressed (step S262).

Upon deciding that the cancel button 92 has not been pressed (NO at step S262), the automatic ordering device 25A decides whether the update button 93 has been pressed (step S263).

Upon deciding that the update button 93 has not been pressed (NO at step S263), the automatic ordering device 25A returns to step S262.

Upon deciding that the update button 93 has been pressed (YES at step S263), the automatic ordering device 25A updates the status of the automatic ordering prohibition flag in the device information 24D, according to the check mark status of the automatic ordering prohibition check boxes at the time that the update button 93 was pressed (step S264).

To be more specific, the automatic ordering device 25A raises the automatic ordering prohibition flag in the device information 24D, with respect to the toner color of the image forming apparatus 30 or 40, corresponding to the automatic ordering prohibition check box 91 that was checked when the update button 93 was pressed. On the other hand, the automatic ordering device 25A lays down the automatic ordering prohibition flag in the device information 24D, with respect to the toner color of the image forming apparatus 30 or 40, corresponding to the automatic ordering prohibition check box 91 that was blank when the update button 93 was pressed.

Upon deciding that the cancel button 92 has been pressed (YES at step S262), or finishing the operation of step S264, the automatic ordering device 25A causes the display device 62 of the user terminal 60 to erase the display of the automatic ordering prohibition status screen 90 (step S265), and finishes the operation specified in Fig. 25.

Hereunder, an operation of the external ordering system 50, performed when the toner is manually ordered, will be described.

The user of the external ordering system 50, such as the service person in charge of the maintenance work for the image forming apparatuses 30 and 40, can instruct, after making access to the external ordering system 50 using the user terminal 60, the external ordering system 50 to place an order for the toner container, through the operation device 61 of the user terminal 60.

Such an instruction includes the model name and the serial number of the relevant image forming apparatus 30 or 40, the customer ID and customer name of the customer utilizing the relevant image forming apparatus 30 or 40, the color of the toner to be ordered, and the number of pieces of the toner containers, of each of the color to be ordered.

Upon receipt of the instruction to place the order for the toner container, the external ordering device 55A of the external ordering system 50 places the order for the toner container, the ordering of which has been ordered, with the supply source of the toner container.

Now, in the case of the aforementioned known consumables ordering system, it is difficult to notify the failure in automatic ordering of the consumable at an appropriate timing to the user. Accordingly, when the automatic ordering of the consumable has failed, such a situation may be incurred that the consumable for replacement is unavailable, when the consumable has run out in the electronic device. As result, the electronic device may become unusable.

In contrast, according to the foregoing embodiment, when the automatic ordering of toner has failed (NO at step S208), the device management system 20 notifies the automatic ordering failure information to the specific destination (step S243 or step S245). Therefore, the possibility of making the user aware of the failure in automatic ordering of the toner can be increased. The user who has received the notice of the automatic ordering failure information can, for example, place the order for the toner manually, on the basis of the automatic ordering failure information.

When the automatic ordering of the toner has failed (NO at step S208), the device management system 20 records the ordering failure history, representing the history of the failure in automatic ordering of the toner (step S213), and notifies the automatic ordering failure information based on the ordering failure history, when the failure notice time comes (step S243 or step S245). Such an arrangement prevents the automatic ordering failure information from being notified excessively frequently.

Here, when the automatic ordering of the toner has failed, the device management system 20 may notify the automatic ordering failure information, on each occasion.

Since the device management system 20 can accept the designation of the failure notice time, for notifying the automatic ordering failure information, the device management system 20 can notify the automatic ordering failure information at a time convenient to the user. As result, the work efficiency of the user can be improved.

Alternatively, the device management system 20 may be set to notify the automatic ordering failure information, at a fixed failure notice time.

When the failure notice time comes, the device management system 20 notifies the automatic ordering failure information, on the basis of the ordering failure history other than the ordering failure history that was the basis of the automatic ordering failure information already notified (step S245). Such an arrangement facilitates the user to manually order an appropriate amount of toner promptly.

In the case where, there is no ordering failure history other than the ordering failure history that was the basis of the automatic ordering failure information already notified, when the failure notice time comes (NO at step S244), the device management system 20 does not notify the automatic ordering failure information. Therefore, the user can be prevented from manually ordering unnecessary toner.

According to the foregoing embodiment, the automatic ordering failure information is notified by e-mail. However, the device management system 20 may notify the automatic ordering failure information, by a method other than the e-mail.

In the embodiment, the consumables according to the invention is exemplified by the toner to be used by the image forming apparatuses 30 and 40. However, the consumables according to the invention may be an item other than the toner to be used by the image forming apparatuses 30 and 40, or consumables to be used by an electronic device other than the image forming apparatuses 30 and 40.

## Claims

1. A consumables ordering system (20) comprising:
a communication device (23) communicates with an external device;
a storage device (24) in which a predetermined destination is stored; and
a control device (25) including a processor, and configured to act as an automatic ordering device (25A) that places an order for consumables to be used in an electronic device (30, 40), when the processor executes a consumables ordering program (24A),
wherein the automatic ordering device (25A) sends, when ordering of the consumables has failed, ordering failure information indicating that the ordering of the consumables has failed, to a predetermined destination via the communication device (23).

2. The consumables ordering system (20) according to claim 1,
wherein the storage device (24) further contains time information indicating a predetermined time of day of notice, and
the automatic ordering device (25A) stores, when the ordering of the consumables has failed, history information representing the failure in ordering the consumables, in the storage device (24), and notifies, when notice time indicated by the time information comes, the ordering failure information based on the history information, to the predetermined destination via the communication device (23).

3. The consumables ordering system (20) according to claim 2, further comprising an input device (23, 61) that receives an input of an instruction of a user,
wherein the automatic ordering device (25A) stores, upon receipt of a designation of the notice time through the input device (23, 61), the time information indicating the designated notice time, in the storage device (24).

4. The consumables ordering system (20) according to claim 2,
wherein the automatic ordering device (25A) notifies, when the notice time indicated by the time information comes, the ordering failure information based on the history information other than the history information that is a basis of the ordering failure information already notified to the predetermined destination, via the communication device (23) to the predetermined destination.

5. The consumables ordering system (20) according to claim 4,
wherein, in a case where there is no history information other than the history information already notified, when the notice time indicated by the time information comes, the automatic ordering device (25A) keeps from notifying the ordering failure information to the predetermined destination.

6. The consumables ordering system (20) according to claim 1,
wherein the automatic ordering device (25A) notifies, when the ordering of the consumables has succeeded, ordering success information indicating that the ordering of the consumables has succeeded, to the predetermined destination via the communication device (23).

7. A consumables ordering program (24A) being configured to cause a computer (20), including a communication device (23) that communicates with an external device, a storage device (24) in which a predetermined destination is stored, and a processor, to act, when the processor executes the consumables ordering program (24A), as an automatic ordering device (25A) that places an order for consumables to be used in an electronic device (30, 40), and sends, when ordering of the consumables has failed, ordering failure information indicating that the ordering of the consumables has failed, to a predetermined destination via the communication device (23).
